**Europäisches Patentamt**

**European Patent Office**

**Office européen des brevets**

(19)

(11) Veröffentlichungsnummer : **0 547 270 B1**

(12)

# EUROPÄISCHE PATENTSCHRIFT

(45) Veröffentlichungstag der Patentschrift :
**17.05.95 Patentblatt 95/20**

(51) Int. Cl.$^6$ : **G01D 5/36**, G01D 5/38

(21) Anmeldenummer : **91121958.2**

(22) Anmeldetag : **20.12.91**

(54) **Fotoelektrische Vorrichtung zur Erzeugung oberwellenfreier periodischer Signale.**

(43) Veröffentlichungstag der Anmeldung :
**23.06.93 Patentblatt 93/25**

(45) Bekanntmachung des Hinweises auf die
Patenterteilung :
**17.05.95 Patentblatt 95/20**

(84) Benannte Vertragsstaaten :
**DE FR GB IT**

(56) Entgegenhaltungen :
**EP-A- 0 106 951**
**EP-A- 0 250 711**
**EP-A- 0 263 888**
**DE-C- 1 941 731**

(56) Entgegenhaltungen :
**FR-A- 2 522 164**
**PATENT ABSTRACTS OF JAPAN vol. 11, no. 5**
**(P-533) 8. Januar 1987 & JP-A-61182522**
**PATENT ABSTRACTS OF JAPAN vol. 9, no.**
**101 (P-353) 2. Mai 1985 & JP-A-59226822**
**PATENT ABSTRACTS OF JAPAN vol. 8, no. 18**
**(P-250) 26. Januar 1984 & JP-A-58176516**

(73) Patentinhaber : **Dr. Johannes Heidenhain**
**GmbH**
**Postfach 12 60**
**D-83292 Traunreut (DE)**

(72) Erfinder : **Holzapfel, Wolfgang, Dr. Dipl.-Phys.**
**Blumenstrasse 24**
**W-8201 Obing (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine fotoelektrische Vorrichtung gemäß dem Oberbegriff des Anspruches 1.

Derartige Vorrichtungen werden zur Messung von Lageänderungen zweier relativ zueinander beweglicher Objekte benötigt. Dabei werden die unterschiedlichsten physikalischen Abtastprinzipien benutzt. Man unterscheidet zwischen fotoelektrischer, magnetischer, induktiver und kapazitiver Abtastung.

Das Grundprinzip ist jedoch allen Methoden gemeinsam: Eine periodische Meßteilung wird abgetastet und das so erzeugte Abtastsignal wird als Meßsignal ausgewertet.

Die Periode der gewonnenen Abtastsignale wird durch die Teilungsperiode oder das Inkrement der Teilung des Teilungsträgers bestimmt. Das Inkrement wird bei fotoelektrischen Meßeinrichtungen durch die Breiten eines lichtdurchlässigen Streifens und eines lichtundurchlässigen Streifens in Meßrichtung gebildet. Bei der Relativbewegung zwischen der Abtasteinheit und der Meßteilung des Teilungsträgers wird von jedem abgetasteten Inkrement ein Zählimpuls abgeleitet, vorzeichenrichtig aufsummiert und die Summe steht als Meßwert zur Verfügung.

Die aus den Teilungen der Teilungsträger bei fotoelektrischen, magnetischen, induktiven und kapazitiven Meßeinrichtungen gewonnenen periodischen Analogsignale weisen im allgemeinen keinen reinen sinusförmigen Verlauf auf, sondern sind oberwellenbehaftet. Diese Oberwellen werden durch verschiedene Ursachen hervorgerufen. Um die gewonnenen Analogsignale weitgehend oberwellenfrei zu halten, müssen hohe Anforderungen an die Genauigkeit der Teilungen gestellt werden. Zur Bildung von genauen Positions-meßwerten für jede Teilungsperiode und um zur weiteren Erhöhung der Auflösung die Teilungsperioden der Teilung durch Bildung von Interpolationswerten exakt unterteilen zu können, muß das aus dieser Teilung gewonnene Analogsignal oberwellenfrei sein; eine Bildung von Interpolationswerten beispielsweise mittels eines Rechners ist in der DE-OS 27 29 697 beschrieben.

Weiterhin sind Meßeinrichtungen bekannt, die dreieckförmige oder trapezförmige Analogsignale liefern, die naturgemäß stets oberwellenbehaftet sind.

Aus der DE-PS 19 41 731 ist eine fotoelektrische Längenmeßeinrichtung bekannt, bei der zur Gewinnung eines oberwellenfreien Analogsignals bei der Abtastung der Teilung eines Teilungsträgers eine Frequenzfilterblende mit einem sinusförmigen Durchlässigkeitsverlauf vorgesehen ist. Bei dieser Meßeinrichtung muß eine spezielle Frequenzfilterblende hergestellt und eingebaut werden. Zudem ist diese Meßeinrichtung auf das fotoelektrische Durchlichtmeßprinzip beschränkt, bei dem ein aus periodischen Helligkeitsschwankungen aufgebautes Streifensystem erzeugt wird.

Ferner sind Druckschriften bekannt, bei denen die Meßteilung sinusförmig gestaltet ist. Als Beispiele seien die Dokumente "Patent Abstracts of Japan, vol. 11, no. 5 (P-533)8. Jan. 1987 & JP-A-61 182 522 (Tokyo Seimitsu Co Ltd)15. Aug. 1986" und die EP-A1-0 263 888 genannt. Bei den dort beschriebenen Meßeinrichtungen wird allerdings der Beugungseffekt nicht ausgenutzt.

Der Erfindung liegt die Aufgabe zugrunde, eine Vorrichtung zur Gewinnung oberwellenfreier periodischer Signale anzugeben, die zu diesem Zweck keiner zusätzlichen Elemente bedarf und universell einsetzbar ist.

Diese Aufgabe wird erfindungsgemäß durch die Merkmale des Anspruches 1 gelöst.

Die mit der Erfindung erzielten Vorteile bestehen insbesondere darin, daß auf einfache Weise die Gewinnung oberwellenfreier periodischer Signale lediglich mit abgewandelten herkömmlichen Mitteln bekannter Positionsmeßeinrichtungen ermöglicht wird, ohne daß zusätzliche Elemente wie Frequenzfilterblenden erforderlich sind.

Vorteilhafte Weiterbildungen der Erfindung entnimmt man den Unteransprüchen.

Anhand von Zeichnungen wird die Erfindung mit Hilfe von Ausführungsbeispielen näher erläutert.

Es zeigt

| Figur 1 | ein Prinzipschaubild mit einer zweidimensionalen Beugungsstruktur als Meßteilung; |
| Figur 2 bis 4 | verschiedene Elementarzellen einer zweidimensionalen Beugungsstruktur; |
| Figur 5 | einen vergrößerten Ausschnitt der Meßteilung aus Figur 1 als Einzelheit V; |
| Figur 6 | eine Maßverkörperung mit periodischer Beugungsstruktur nebst Abtastteilung; |
| Figur 7 | eine Maßverkörperung gemäß Figur 6 mit integrierter Referenzmarke nebst Abtastteilungen; |
| Figur 8 | eine Maßverkörperung mit zwei periodischen Beugungsstrukturen nebst zugehörigen Abtastteilungen und |
| Figur 9 | eine weitere Maßverkörperung mit mehreren Beugungsstrukturen und zugehörigen Abtastteilungen. |

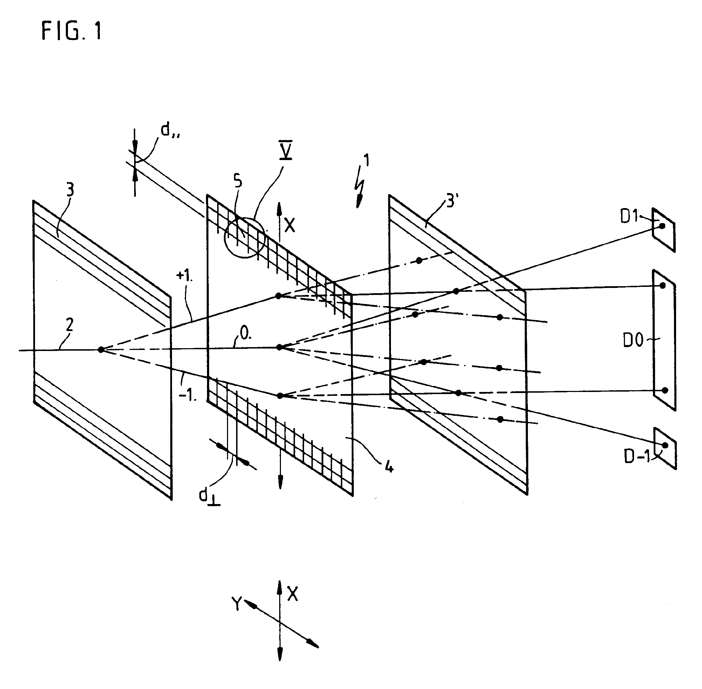

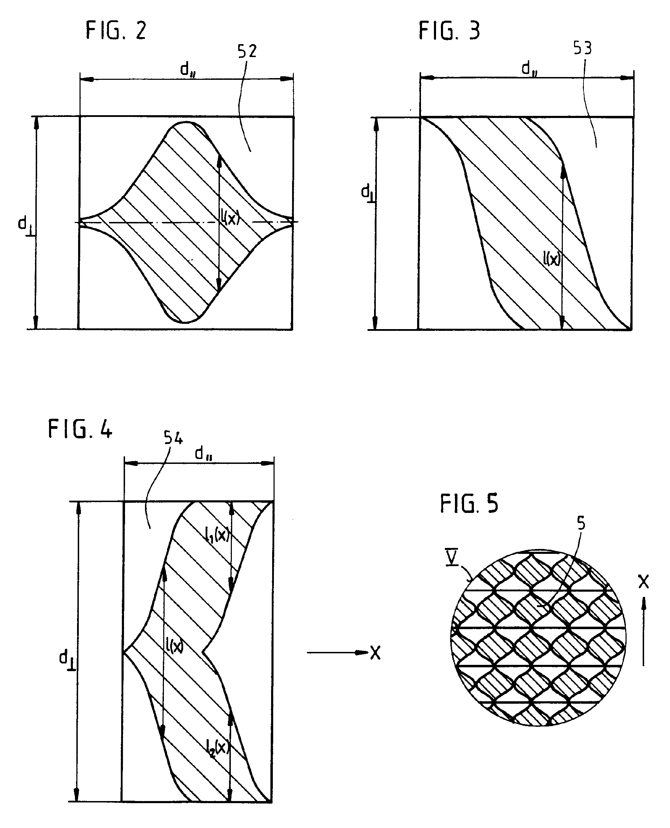

Eine in Figur 1 dargestellte Längenmeßeinrichtung 1 ist nach dem sogenannten Dreigittergeber-Prinzip aufgebaut. Eine nichtdargestellte Lichtquelle liefert einen Lichtstrahl 2, der an einem ersten Gitter 3 gebeugt und in Teilstrahlenbündel -1., 0. und +1. Beugungsordnungen zerlegt wird. Die gebeugten Teilstrahlenbündel -1., 0., +1. treffen auf die Maßverkörperung 4, die eine zweidimensionale, binäre Beugungsstruktur 5 aufweist. Diese Beugungsstruktur 5 ist als Einzelheit V in Figur 5 vergrößert dargestellt. Die Beugungsstruktur 5 ist aus Elementarzellen 52, 53 und/oder 54 aufgebaut, die als vergrößert dargestellte Elementarzellen 52 bzw. 53 bzw. 54 in den Figuren 2, 3 und 4 um 90° gedreht gezeigt sind und noch erläutert werden.

Durch die Verwendung derartiger Elementarzellen 52, 53, 54 als Meßteilung 5 werden ideale, d.h. oberwellenfreie inkrementale Abtastsignale erzeugt. Dazu müssen die Elementarzellen 52, 53, 54 als zusammengesetzte binäre Beugungsstruktur 5 vorzugsweise folgende Bedingungen erfüllen:

- die Struktur besitzt ein binäres Höhenprofil mit einer Phasenhöhe von 180°;
- die senkrecht zur Meßrichtung (transversal) gemessene Länge $L_{(x)}$ der erhabenen (oder auch der nicht erhabenen) Flächenbereiche innerhalb einer Elementarzelle 52, 53, 54 muß einen cosinusförmigen Verlauf haben;
- die erhabenen und die nichterhabenen Flächenbereiche innerhalb einer Elementarzelle 52, 53, 54 müssen die gleiche Fläche besitzen.

Ferner müssen Detektoren D1, D0, D-1 so angeordnet sein, daß von den mittels einer derartigen Meßteilung 5 erzeugten Beugungsstrahlen (Teilstrahlenbündel) nur die Beugungsstrahlen auf die Detektoren D1, D0, D-1 treffen, die nicht senkrecht zur Meßrichtung (transversal) abgelenkt werden (s. Figur 1). D.h., nur die nullten transversalen Beugungsordnungen der Meßteilung 5 werden detektiert. Die transversale Teilungsperiode d⊥, muß dazu entsprechend klein gewählt werden.

Eine Meßeinrichtung 1 mit den geschilderten Eigenschaften besitzt in den nullten (0.) transversalen Beugungsordnungen nur die +1. und die -1. longitudinale Beugungsordnung.

In Verbindung mit dem sogenannten Dreigittergeber-Prinzip (zwischen dem Beugungsgitter 3 und dem Beugungsgitter 3′ kann bei Auflichtvarianten des Meßsystems körperliche Identität bestehen) lassen sich oberwellenfreie Inkrementalsignale erzeugen.

In Figur 2 ist eine der Elementarzellen 52 dargestellt, aus denen die Struktur 5 in Figur 5 zusammengestellt ist. Mit d‖ ist die Gitterkonstante in longitudinaler Richtung bezeichnet, also in Meßrichtung X. Mit d⊥ ist die Gitterkonstante senkrecht zur Meßrichtung X, also transversal (Y), bezeichnet.

Diese Definitionen gelten auch für die Ausführungsbeispiele der Figuren 3 und 4, in denen zwar eine andere Form der Elementarzellen 53 und 54 gezeigt ist, denen jedoch dasselbe Grundprinzip zugrunde liegt. Dieses Grundprinzip ist die Abhängigkeit der transversalen Länge $L_{(x)}$ von einer cosinus-Funktion, die durch folgende Gleichung ausgedrückt wird:

$$L_{(x)} = \frac{d\perp}{2}\left(\cos\left(\frac{2\pi}{d_{\,\|}}\,X\right)+1\right) \qquad (1)$$

Für das Ausführungsbeispiel gemäß Figur 4 kann darüber hinaus noch gelten:

$$L_{1(x)} = L_{2(x)} = \frac{d\perp}{4}\left(\cos\left(\frac{2\pi}{d_{\,\|}}X\right)+1\right) \qquad (2)$$

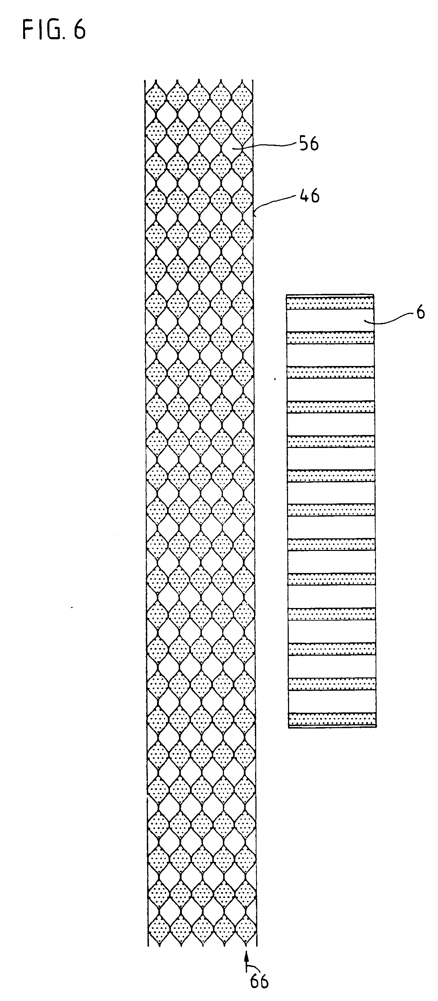

In Figur 6 ist eine Maßverkörperung 46 mit einer erfindungsgemäßen Beugungsstruktur 56 gezeigt, die aus Elementarzellen gemäß Figur 2 zusammengesetzt ist. Die Abtastung erfolgt mit einem periodischen Abtastgitter 6, welches den Gittern 3 bzw. 3′ in Figur 1 entspricht.

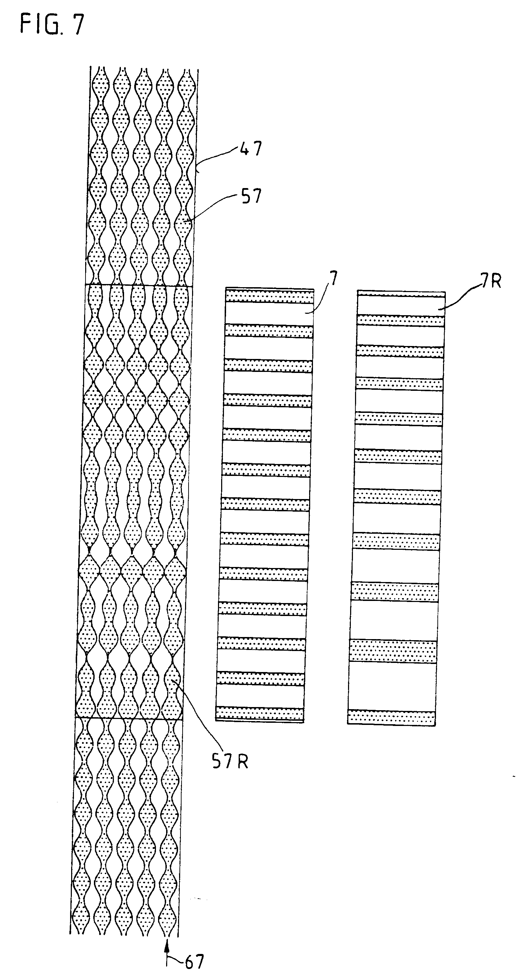

Bei diesem und den in den Figuren 7 bis 9 gezeigten Ausführungsbeispielen sind longitudinal verlaufende Segmente 66, 67, 68, 69 transversal periodisch nebeneinander angeordnet, wie nachstehend noch näher beschrieben wird.

Im Ausführungsbeispiel gemäß Figur 7 ist der periodischen Struktur 57 auf der Maßverkörperung 47 noch eine unperiodische Struktur 57R überlagert, die jedoch ebenfalls gemäß der Erfindung strukturiert ist. Die transversale Ausdehnung unterliegt der cosinus-Funktion und in longitudinaler Richtung enthält die Struktur 57R weitere Frequenzkomponenten die ortsabhängig unterschiedlich sind. Ein Abtastgitter 7R ist als gechirptes Gitter ausgebildet, dessen lokale Periode in gleicher Weise ortsabhängig ist, wie die Struktur 57R.

In dieser Weise kann durch die unperiodische Struktur 57R eine Referenzmarke in die inkrementale Meßteilung 57 integriert werden. Für die Abtastung einer derartig strukturierten Maßverkörperung 47 wird einmal ein periodisches Abtastgitter 7 sowie das gechirpte Gitter 7R verwendet.

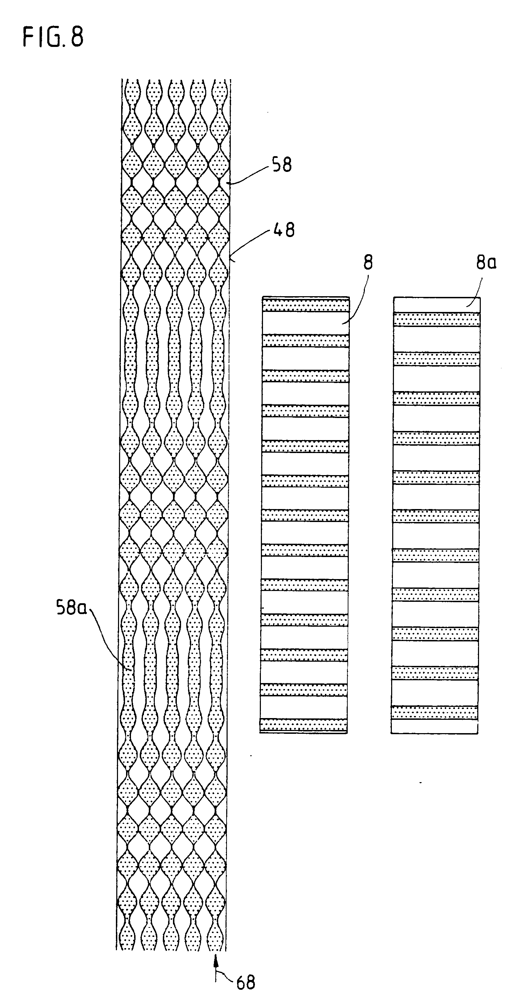

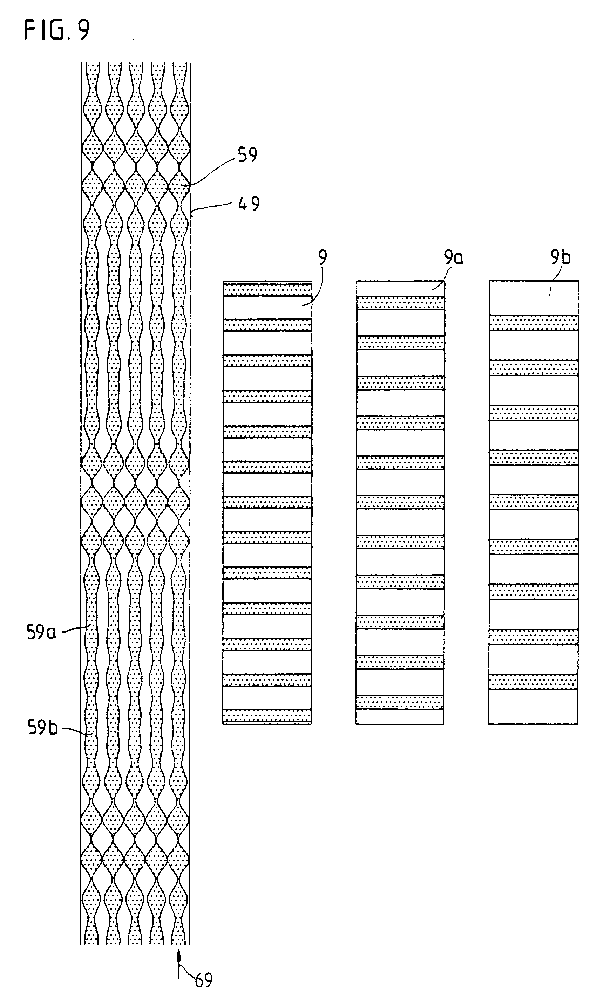

Figur 8 zeigt ein weiteres Ausführungsbeispiel, bei dem auf einer Maßverkörperung 48 zwei jeweils periodisch strukturierte Meßteilungen 58 und 58a ineinandergeschachtelt sind und mit zwei zugehörigen periodischen Abtastgittern 8 und 8a abgetastet werden. Dieses Ausführungsbeispiel stellt gewissermaßen eine Zwischenstufe zum Beispiel gemäß Figur 9 dar.

Dort ist auf einer Maßverkörperung 49 eine Meßteilung angeordnet, die aus überlagerten periodischen Strukturen 59, 59a, 59b besteht und mit entsprechend periodischen Abtastgittern 9, 9a, 9b abgetastet wird. In Fortführung dieser erfindungsgemäßen Ausgestaltung der Maßverkörperung 49 und ihrer Abtastelemente 9 bis 9b läßt sich unter Beibehaltung des inkrementalen Abtastprinzipes ein absolut kodierter Maßstab erstellen, dessen Teilungsstruktur sich longitudinal erstreckt und bei dem die Ausdehnung der Struktur transversal einer Summe von endlich vielen cosinus-Funktionen entspricht. Mathematisch läßt sich diese Strukturierungsbedingung wie folgt ausdrücken:

$$L_{(x)} = L_o + L_1 \cos k_1 x + L_2 \cos(k_{2x} + \,_2) + L_3 \cos(k_{3x} + \,_3) + ...(3)$$

Bei allen Varianten empfiehlt sich, die Struktur in transversaler Richtung periodisch mehrfach auf die Maßverkörperung 4 aufzubringen, da sich dann die nullten (0.) Beugungsordnungen trennen lassen, so daß sie auf die Detektoren D1, D0, D-1 gelenkt werden können.

In Abhängigkeit vom Abtastverfahren sind auch andere Prinzipien möglich, als das eingangs erwähnte Dreigittergeber-Prinzip. Ebenfalls können sowohl Phasen- als auch Amplitudengitter-Strukturen zur Anwendung kommen.

## Patentansprüche

1. Fotoelektrische Vorrichtung (1) zum Erzeugen von Signalen mit einer Lichtquelle und mit einer Maßverkörperung (4, 46, 47, 48, 49), welche eine Meßteilung (5, 56, 57, 58, 59) in Form einer zweidimensionalen binären Struktur (52, 53, 54) aufweist, deren senkrecht zur Meßrichtung (transversal) gemessene Länge $L_{(x)}$ der erhabenen - oder auch der nicht erhabenen Flächenbereiche innerhalb einer Elementarzelle (52, 53, 54) einen cosinusförmigen Verlauf hat und mit wenigstens einer Abtasteinrichtung (3, 3', 6, 7, 8, 9), wobei die Meßteilung (5, 56, 57, 58, 59) durch mehrere longitudinal verlaufende Segmente (66, 67, 68, 69) gebildet wird, die in transversaler Richtung nebeneinander angeordnet sind, dadurch gekennzeichnet, daß die Segmente (66, 67, 68, 69) das auf die Maßverkörperung (4, 46, 47, 48, 49) auftreffende Lichtbündel in verschiedene transversale Richtungen beugen, und daß nur die in nullter transversaler Beugungsordnung gebeugten Teilstrahlenbündel von Detektoren (DO) erfaßt werden.

2. Vorrichtung nach Anspruch 1, dadurch gekennzeichnet, daß die Struktur (5) eine beugende Phasenstruktur mit erhabenen und nicht erhabenen Flächenbereichen ist.

3. Vorrichtung nach Anspruch 1, dadurch gekennzeichnet, daß die beugende Struktur eine Amplitudenstruktur mit absorbierenden und nicht absorbierenden Flächenbereichen ist.

## Claims

1. Photoelectric device (1) for generating signals with a light-source and a material measure (4, 46, 47, 48, 49) having a measurement scale (5, 56, 57, 58, 59) in the form of a two-dimensional binary structure (52, 53, 54), whose length $L_{(\alpha)}$ measured vertically to the direction of measurement of the raised - or even of the non-raised - surface areas within an elementary cell (52, 53, 54) has a cosinoidal configuration, and is formed with at least one scanning device (3, 3', 6, 7, 8, 9), the measurement scale (5, 56, 57, 58, 59) being formed by a plurality of longitudinally-extending segments (66, 67, 68, 69) which are disposed next to one another in a transverse direction, characterised in that the segments (66, 67, 68, 69) diffract the beam of light impinging on the material measure (4, 46, 47, 48, 49) in various transverse directions, and in that only the partial beams of light diffracted in a zero order of diffraction are perceived by detectors (DO).

2. Device according to claim 1, characterised in that the structure (5) is a diffracting phase structure with raised and non-raised surface areas.

3. Device according to claim 1, characterised in that the diffracting structure is an amplitude structure with absorbent and non-absorbent surface areas.

## Revendications

1. Dispositif (1) photo-électrique pour la production de signaux comportant une source de lumière et une mesure matérialisée (4, 46, 47, 48, 49) qui porte une graduation de mesure (5, 56, 57, 58, 59) sous la forme d'une structure (52, 53, 54) binaire à deux dimensions dont la longueur $L_{(x)}$ mesurée perpendiculairement à la direction de mesure (transversalement) des zones de surface surélevées - ou également non surélevées - à l'intérieur d'une cellule élémentaire (52, 53, 54), suit une fonction cosinus ainsi qu'au moins un dispositif de balayage (3, 3′, 6, 7, 8, 9), la graduation de mesure (5, 56, 57, 58, 59) étant formée de plusieurs segments (66, 67, 68, 69) qui s'étendent dans la direction longitudinale et sont disposés côte à côte dans la direction transversale, caractérisé par le fait que les segments (66, 67, 68, 69) diffractent dans différentes directions transversales le faisceau lumineux qui frappe la mesure matérialisée (4, 46, 47, 48, 49) et par le fait que seuls les faisceaux partiels de rayons qui sont diffractés avec un ordre transversal zéro sont détectés par des détecteurs (DO).

2. Dispositif selon la revendication 1, caractérisé par le fait que la structure (5) est une structure de phase diffractante avec des zones de surface surélevées et des zones de surface non surélevées.

3. Dispositif selon la revendication 1, caractérisé par le fait que la structure diffractante est une structure d'amplitude avec des zones de surface absorbantes et des zones de surface non absorbantes.

# FIG. 1

FIG. 2

FIG. 3

FIG. 4

FIG. 5

EP 0 547 270 B1

FIG. 6

FIG. 7

FIG.8

58

48

8

8a

58a

68

# FIG. 9